# EUROPEAN PATENT APPLICATION

(11) **EP 1 522 361 A1**
(43) Date of publication of application: **13.04.2005**
(21) Application number: 02783097.5
(22) Date of filing: 18.10.2002
(51) Int. Cl.: B23B 41/00

(54) **PRECISION MACHINING METHOD FOR INNER DIAMETERS OF HOLES IN CRANKSHAFTS AND MACHINE FOR SAME**

(30) Priority: 12.07.2002 ES 200201678 P
(71) Applicant: Etxe-Tar, S.A., 20870 Elgoibar (ES)
(72) Inventor: GABILONDO PENALBA, Jose Juan, E-20870 Elgoibar (ES)
(74) Representative: Urizar Barandiaran, Miguel Angel
(86) International application number: PCT/ES2002/000494
(87) International publication number: WO 2004/007131

(57) **Abrégé**

Procédé d'usinage de précision pour alésages d'orifices sur des vilebrequins et machine pour ce procédé, dans lequel le vilebrequin est fixé, à une extrémité, par des moyens qui génèrent, à leur tour, la rotation du vilebrequin sur l'axe Z et, à l'autre extrémité, par une lunette disposée à proximité de la bride; une unité d'usinage avec une tête de fraisage à broche porte-fraise qui dispose, au moins, d'un mouvement longitudinal suivant les axes (X,Z) ou (Y,Z) étant disposée en face de la bride; et il est procédé à la rotation du vilebrequin à moins de 50 tr/mn., avec une première phase avec arrachage de tournure suivant l'axe X ou Y, avec la fraise tournant sur son axe sans déplacement longitudinal de la fraise ; et une deuxième phase avec arrachage de tournure avec la fraise tournant sur son axe et avec un déplacement longitudinal suivant l'axe Z.

Applicable aux machines-outils.

## Description

Le procédé de fabrication d'un vilebrequin exige de nombreuses étapes, une grande qualité ainsi qu'une grande précision.

L'une des zones dans laquelle est exigé le plus grand degré de précision est le trou borgne (pilot bore) à percer dans la bride, c'est-à-dire sur l'une des faces latérales du vilebrequin.

Jusqu'à présent, la précision exigée par les fabricants d'automobiles pour ces orifices dans les vilebrequins est atteinte grâce à une opération de tournage intérieur du trou.

En général, le résultat est acceptable, mais, de temps en temps, et sans raison apparente, le Service Qualité des fabricants d'automobiles détectent des anomalies dans la finition de précision de ces trous.

Le problème étant posé, le demandeur recherche et détecte que les anomalies apparaissent sur les vilebrequins où la distribution de la masse radiale n'est pas compensée, par exemple un vilebrequin pour un moteur six cylindres.

Le comportement de ces vilebrequins étudié en laboratoire, le demandeur arrive à la conclusion que, si le vilebrequin tourne au-dessus de 300 tr/mn. lors de l'usinage, les décompensations de masses radiales empêchent d'atteindre la précision de finition voulue.

On utilise actuellement, comme cela a déja été dit, un usinage par tournage qui demande une rotation du vilebrequin supérieure à 800 tr/mn. pour obtenir une vitesse de coupe appropriée, ce qui invalide le tournage comme méthode de fabrication, dans ces cas.

La cause du problème étant trouvée et après avoir rejeté des solutions théoriques qui n'ont pas donné, dans la pratique, les résultats escomptés, le demandeur a trouvé la solution grâce à une finition de précision par fraisage moyennant interpolation circulaire entre la pièce et l'outil avec deux phases selon les axes (X, Z) ou (Y, Z).

La présente invention préconise un procédé d'usinage de précision pour orifice borgne dans la bride d'un vilebrequin, se caractérisant par le fait que:
a) le vilebrequin est fixé, à une extrémité, par des moyens qui génèrent, à leur tour, la rotation du vilebrequin sur l'axe Z et, à l'autre extrémité, par une lunette disposée à proximité de la bride;
b) une unité d'usinage ayant une tête de fraisage à broche porte-fraise, qui dispose, au moins, d'un mouvement longitudinal selons les axes X, Y et Z, est disposée en face de la bride selon l'axe Z ;
   et il est procédé à la rotation du vilebrequin à moins de 50 tr/mn. avec
c) une première phase avec arrachage de tournure suivant l'axe X ou Y, avec la fraise tournant sur son axe sans déplacement longitudinal de la fraise;
d) une deuxième phase avec arrachage de tournure avec la fraise tournant sur son axe et avec déplacement longitudinal suivant l'axe Z.

Elle se caractérise aussi par le fait que, lors d'une troisième phase, le diamètre de l'orifice borgne usiné est mesuré, qu'il est comparé à la dimension préalablement établie pour le diamètre et, en cas d'écart entre les deux, que la compensation correspondante est ordonnée suivant l'axe X ou Y à l'unité d'usinage.

Pour mieux comprendre l'objet de la présente invention, on a représenté sur les plans une forme préférentielle de réalisation pratique susceptible de changements accessoires qui n'en dénaturent pas le fonctionnement.
La figure 1 est une vue en section longitudinale d'un vilebrequin.
La figure 2 est une vue latérale avec le vilebrequin de la figure 1 et les unités d'usinage et de rotation utilisées dans le procédé objet de l'invention.
La figure 3a est une représentation schématique de la position-mouvement relatif de la fraise par rapport au vilebrequin.
La figure 3b est une représentation schématique de l'arrachage de la tournure de la fraise suivant l'axe X.
La figure 3c est une représentation schématique de l'arrachage de la tournure de la fraise suivant l'axe Z, le tout suivant le procédé objet de l'invention.

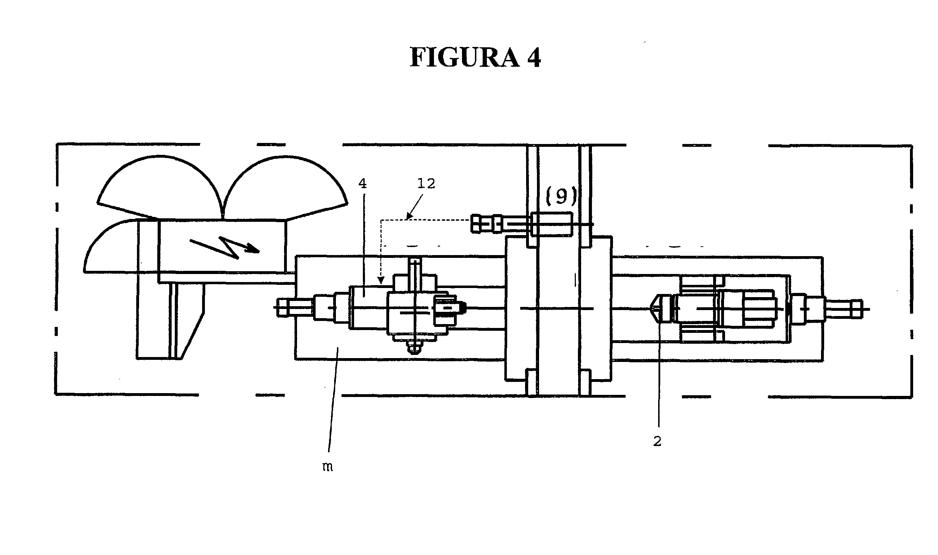

La figure 4 est une vue en plan de la machine dans son ensemble sur laquelle est exécuté le procédé qui fait l'objet de l'invention.

On décrit ci-dessous un exemple de réalisation pratique, non limitative, de la présente invention.

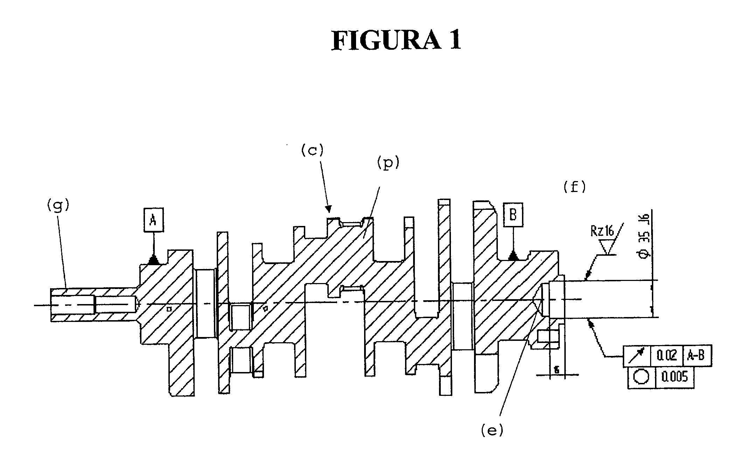

On dispose d'un vilebrequin (C) (figure 1) avec des masses (p) décompensées radialement, et où un orifice borgne (e) a été pratiqué sur la face de la brides (f).

On prétend obtenir, par exemple, un usinage intérieur 035 J6 (+0.010/-0.006 mm), degré de précision IT6 et 15 mm de profondeur sur un vilebrequin pour un moteur de 6 cylindres en acier forgé (720 - 950 N/mm²), avec une tolérance d'oscillation circulaire-radiale de 0.02 mm par rapport à l'axe formé par les appuis du vilebrequin (A), (B), une rugosité de Rz 16, une rotondité maximale de 5 µm et une conicité maximale de 5 µm.

Les demandes statistiques de capacité du procédé sont de Ppk ≥1.67.

Pour des nécessités de production, on dispose de 20 secondes environ pour l'opération d'usinage.

La mesure de l'oscillation circulaire radiale s'effectue avec la lecture d'une horloge comparatrice sur le diamètre usiné, en faisant tourner la pièce par rapport à l'axe de référence.

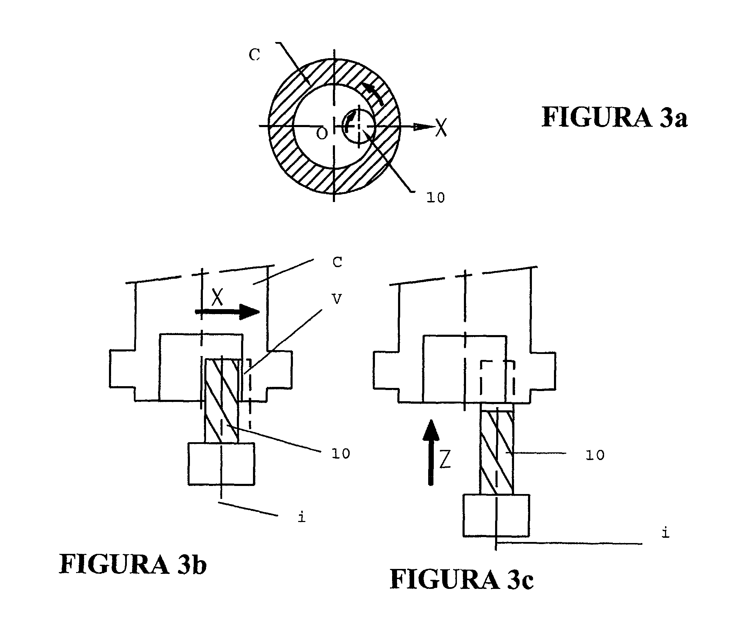

Pour obtenir ces spécifications, la solution consiste à faire un fraisage, dans lequel le mouvement relatif entre la pièce et la fraise est circulaire. Pour obtenir ce mouvement relatif avec la précision voulue pour respecter les tolérances de rotondité et d'oscillation circulaire-radiale, on fait tourner le vilebrequin (C), alors que l'outil-fraise (10) ne tourne (sans se déplacer) que pour obtenir la vitesse de coupe (figure 3a). Le vilebrequin tourne à un faible régime, par exemple à 25 tr/mn.

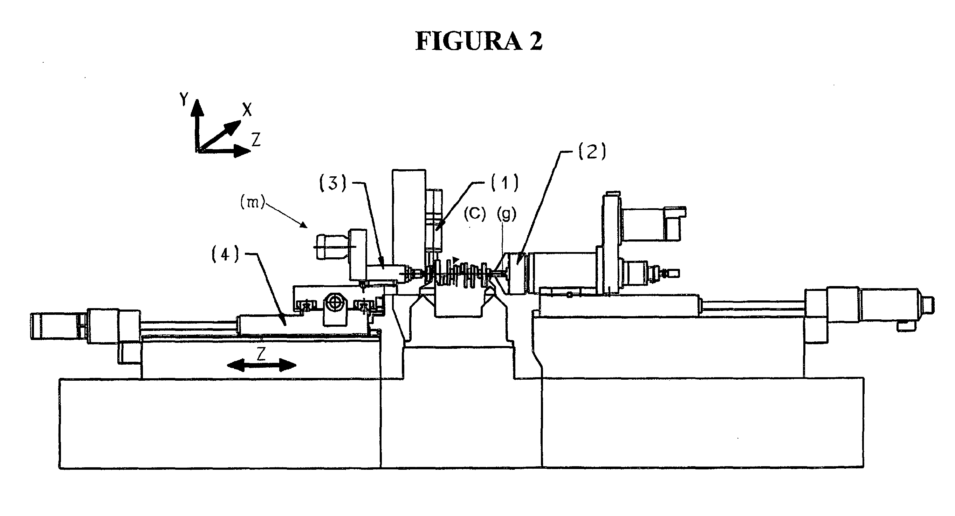

La pièce-vilebrequin (C) est fixée au moyen d'une lunette lubrifiée (1) avec de l'huile dans l'appui du côté bride (f) et avec un plateau à ergots (2) qui fait tourner la pièce du côté du tenon (g) (figures 1 et 2).

L'unité d'usinage (m) se compose d'une tête de fraisage à broche horizontale (3) Z montée sur un chariot-croisé Z-X, ou Z-Y, ou X-Y-Z à contrôle numérique (4), avec des dispositifs de mesure directe de position (figure 2).

Le cycle d'usinage se déroule en deux phases: une première demi-finition à plongée (suivant l'axe X ou Y) (figure 3b) avec l'outil-fraise (10) tournant autour de son axe (i) mais sans mouvement longitudinal et avec arrachage de tournure (V), au cours de laquelle on laisse des reliefs pour la finition finale en diamètre et une finition finale (figure 3c) la fraise (10) pénétrant frontalement suivant l'axe Z.

L'outil (10) est refroidi avec un fluide réfrigérant.

Après usinage, le diamètre de l'orifice borgne (e) est mesuré par un dispositif de mesure (9) dans la station suivante, qui compare la mesure obtenue à celle préalablement établie, en ordonnant (12) au contrôle numérique (4) de l'unité d'usinage (m) de corriger l'erreur apparue et qui est due à l'usure de la fraise (10), ce qui permet une compensation millésimale sur l'axe X ou Y de l'unité d'usinage (m), ce qui confère une grande stabilité au diamètre obtenu, en même temps qu'un allongement de la durée de vie utile de l'outil (10).

Il faut signaler que:
- Le procédé est applicable à tout procédé de finition des alésages sur des pièces de révolution.
- Le procédé d'usinage permet de faire tourner le vilebrequin à un faible régime de rotation (inférieur à 50 tr/mn.), ce qui réduit, pour une large part, les instabilités qui sont produites lors de la rotation de celui-ci.
- Le fait que l'interpolation circulaire s'effectue en faisant tourner la pièce permet d'obtenir les tolérances de diamètre, saut radial, rotondité, conicité et qualité superficielle exigées.
- En combinant la station d'usinage avec celle de mesure ultérieure, on obtient une grande stabilité dans le diamètre usiné.
- L'ensemble de la station d'usinage (outil de fixation, plateau et unité d'usinage) et l'unité de mesure sont facilement intégrables dans une ligne d'usinage de haute production.
- La durée de vie utile de l'outil est très longue, étant donné que le volume de matériau arraché est faible et qu'on dispose d'une station de mesure qui permet de compenser l'usure de l'outil.

## Revendications

1. Procédé d'usinage de précision pour alésages d'orifices sur les vilebrequins, **se caractérisant par le fait que**:
a) le vilebrequin est fixé, à une extrémité, par des moyens qui génèrent, à leur tour, la rotation du vilebrequin sur l'axe Z et, à l'autre extrémité, par une lunette disposée à proximité de la bride;
b) une unité d'usinage ayant une tête de fraisage à broche porte-fraise, disposant au moins d'un mouvement longitudinal suivant les axes (X,Z) ou (Y,Z) est disposée en face de la bride suivant l'axe Z;
et il est procédé à la rotation du vilebrequin à moins de 50 tr/mn. avec :
c) une première phase avec arrachage de tournure suivant l'axe X ou Y, avec la fraise tournant sur son axe sans déplacement longitudinal de la fraise;
d) une deuxième phase avec arrachage de tournure avec la fraise tournant sur son axe et avec déplacement longitudinal suivant l'axe Z.

2. Procédé d'usinage de précision pour orifice borgne dans la bride d'un vilebrequin, selon revendication antérieure, **se caractérisant par le fait que**, dans une troisième phase, on mesure le diamètre de l'orifice usiné, on le compare avec la dimension préalablement établie pour le diamètre et, en cas d'écart entre les deux, la compensation correspondante suivant l'axe X ou Y est ordonnée à l'unité d'usinage.

3. Machine d'usinage de précision pour alésages d'orifices sur vilbrequins, **se caractérisant par le fait qu'**elle se compose de:
a) moyens pour fixer au vilebrequin, à une extrémité, ces moyens générant la rotation du vilebrequin et, à l'autre extrémité, une lunette qui fixe le vilebrequin à proximité de la bride du vilebrequin;
b) une unité d'usinage disposé en face de la bride, suivant l'axe Z, qui comprend une tête de fraisage avec une broche porte-fraise qui usine l'orifice du vilebrequin, qui comporte, au moins, un mouvement longitudinal suivant les axes (X, Z) ou (Y, Z) avec contrôle numérique ;
c) une unité de mesure disposée à la suite de l'unité d'usinage, qui mesure le diamètre de l'orifice usiné dans l'unité d'usinage et la compare à une dimension de diamètre préalablement établie et dans le cas d'un écart entre les deux, elle ordonne au contrôle numérique de l'unité d'usinage la compensation correspondante suivant l'axe X ou Y.
